(19) Europäisches Patentamt
European Patent Office
Office européen des brevets

(11) EP 4 466 294 B1

(12) FASCICULE DE BREVET EUROPEEN

(45) Date de publication et mention de la délivrance du brevet:
**10.09.2025 Bulletin 2025/37**

(21) Numéro de dépôt: **23702045.8**

(22) Date de dépôt: **18.01.2023**

(51) Classification Internationale des Brevets (IPC):
***C08B 30/12*** *(2006.01)* ***C08L 3/02*** *(2006.01)*
***A23L 29/212*** *(2016.01)*

(52) Classification Coopérative des Brevets (CPC):
(C-Sets disponibles)
**C08B 30/12; A23L 29/212; C08L 3/02** (Cont.)

(86) Numéro de dépôt international:
**PCT/EP2023/025015**

(87) Numéro de publication internationale:
**WO 2023/138898 (27.07.2023 Gazette 2023/30)**

(54) **PROCEDE DE FABRICATION DE MELANGES D'AMIDONS THERMIQUEMENT MODIFIES**

VERFAHREN ZUR HERSTELLUNG VON THERMISCH MODIFIZIERTEN STÄRKEBLENDS

METHOD FOR PRODUCING THERMALLY MODIFIED STARCH BLENDS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.01.2022 FR 2200521**

(43) Date de publication de la demande:
**27.11.2024 Bulletin 2024/48**

(73) Titulaire: **ROQUETTE FRERES**
**62136 Lestrem (FR)**

(72) Inventeurs:
- **BOCK, Solène**
  **59130 LAMBERSART (FR)**
- **LEGRAND, Jacques**
  **62131 VERQUIN (FR)**

(74) Mandataire: **Plasseraud IP**
**104 Rue de Richelieu**
**CS92104**
**75080 Paris Cedex 02 (FR)**

(56) Documents cités:
**EP-A1- 1 241 216** **WO-A1-2020/139997**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



**(Cont. page suivante)**

(52) Classification Coopérative des Brevets (CPC):
(Cont.)

C-Sets
**C08L 3/02, C08L 3/02**

## Description

L'invention se rapporte à un procédé de production d'un mélange d'au moins deux amidons thermiquement modifiés, dans lequel les amidons sont des amidons granulaires d'origines botaniques distinctes, ce procédé consistant à mélanger en conditions acides lesdits amidons d'origines botaniques distinctes avant de réaliser le traitement thermique proprement dit.
Les conditions acides s'entendent d'un traitement du mélange d'au moins deux amidons de nature botanique distincte, en phase lait, par un tampon citrate de pH compris entre 4 et 6.
Plus particulièrement, l'invention est relative à un procédé de production d'un mélange de fécule de pomme de terre et d'amidon de maïs waxy thermiquement modifiés.
De tels mélanges d'au moins deux amidons thermiquement modifiés permettent de renforcer leurs propriétés de viscosité tout en conservant les propriétés texturantes exprimées par les amidons thermiquement modifiés préparés à partir d'un amidon issu d'une seule origine botanique.
De tels amidons thermiquement modifiés trouvent alors une utilisation comme agents épaississants et texturants dans de nombreuses applications alimentaires, principalement dans les soupes et sauces, et dans les produits laitiers.

## Contexte de l'invention

Synthétisé par voie biochimique, source d'hydrates de carbone, l'amidon est l'une des matières organiques les plus répandues du monde végétal, où il constitue la réserve nutritionnelle des organismes.
Depuis toujours, les amidons sont utilisés dans l'industrie alimentaire, non seulement comme ingrédient nutritif mais également pour leurs propriétés technologiques, comme agent épaississant, liant, stabilisant ou gélifiant.
Par exemple, les amidons natifs sont utilisés dans les préparations nécessitant une cuisson. L'amidon de maïs, notamment, est la base des « poudres à flan ».
Comme il est riche en amylose, il rétrograde et donc gélifie fortement. Il permet d'obtenir des flans fermes après cuissons et refroidissement.
Il convient également pour les crèmes pâtissières.
Mais celles-ci ne peuvent pas entrer dans les pâtisseries destinées à être congelées car, à la décongélation, le phénomène de synérèse, qui se traduit par une expulsion d'eau, détruit la texture de la crème.
Ainsi, à l'état natif, l'amidon est d'application limitée en raison de la synérèse, mais également en raison de :

- sa faible résistance aux contraintes de cisaillement et aux traitements thermiques,
- sa rétrogradation élevée,
- sa faible processabilité et
- sa faible solubilité dans des solvants organiques communs.

De ce fait, pour répondre aux besoins technologiques exigeants d'aujourd'hui, les propriétés de l'amidon doivent être optimisées par diverses méthodes dites de « modification ».
Ces principales modifications visent alors à adapter l'amidon aux contraintes technologiques résultant de la cuisson, mais aussi de la congélation/décongélation, de l'appertisation ou de la stérilisation, et à le rendre compatible avec une alimentation moderne (micro-ondes, préparations instantanées, "hautes températures"..).
La modification de l'amidon vise alors à corriger un ou certains des défauts mentionnés ci-avant, améliorer ainsi sa polyvalence et satisfaire la demande des consommateurs.
Les techniques de modification de l'amidon ont été globalement classées en quatre catégories : physiques, chimiques, enzymatiques et génétiques, la finalité étant de produire divers dérivés avec des propriétés physicochimiques optimisées.
Les modifications chimiques et physiques sont celles le plus souvent mises en œuvre.
Le traitement chimique consiste à introduire des groupes fonctionnels dans l'amidon, ce qui altère remarquablement ses propriétés physico-chimiques. De telles modifications des amidons natifs granulaires altèrent en effet profondément le comportement en gélatinisation, collage et rétrogradation.
Généralement, ces modifications sont réalisées par dérivatisation chimique, comme l'estérification, l'éthérification, la réticulation ou le greffage.
Cependant, les modifications chimiques sont moins recherchées par le consommateur dans les applications alimentaires (également pour des raisons d'environnement), même si certaines modifications sont considérées comme sûres.
Des modifications physiques variées sont de ce fait proposées, par exemple :

- le traitement par la chaleur humide (terme anglosaxon de « Heat Moisture Treatment » ou HMT), consistant à traiter

l'amidon à des niveaux d'humidité contrôlée (22-27 %) et à haute température, pendant 16 heures, afin d'altérer la structure et les propriétés physicochimiques de l'amidon ;

- la « recuite » (terme anglosaxon d' « annealing »), consistant à traiter l'amidon en excès d'eau, à des températures en-deçà de la température de gélatinisation, afin d'approcher la température de transition vitreuse ;
- le traitement à ultra haute pression (terme anglosaxon de « High Pressure Processing » ou HPP), par lequel on hydrate les régions amorphes du granule d'amidon, ce qui conduit à une distorsion des parties cristallines du granule et favorise l'accessibilité desdites régions cristallines à l'eau ;
- le traitement au plasma de décharge luminescente, qui génère, à température ambiante, des électrons à haute énergie et d'autres espèces hautement actives. Appliqués à l'amidon, ces espèces actives excitent les groupes chimiques de l'amidon et provoquent une réticulation importante des macromolécules ;
- le traitement de pression osmotique (d'acronyme anglosaxon « OPT »), réalisé en présence de solutions à haute teneur en sels. L'amidon est suspendu dans du sulfate de sodium afin de produire une suspension uniforme.

L'amidon passe du type B au type A après traitement, en acquérant ainsi une température de gélatinisation qui augmente de manière significative ;

- le traitement par « inhibition thermique ». En toute généralité, l'inhibition thermique s'entend de la déshydratation d'un amidon jusqu'à atteindre l'état anhydre ou substantiellement anhydre (i.e. < 1 % d'humidité), puis un traitement thermique à plus de 100°C pendant une période de temps suffisante pour « inhiber » l'amidon, en l'occurrence ici pour lui conférer des propriétés d'amidons réticulés. Il est par ailleurs nécessaire de placer l'amidon dans des conditions de pH au moins neutre à préférentiellement alcalin avant de procéder à l'étape de déshydratation poussée. Une alternative de traitement par « inhibition thermique » a été proposée en phase solvant, qui consiste à chauffer un amidon granulaire non prégélatinisé en milieu alcoolique, en présence d'une base et de sels, à une température de 120° à 200°C, pendant 5 minutes à 2 heures.

Quoi qu'il en soit, le processus d'inhibition thermique conduit alors à obtenir une pâte d'amidon présentant des propriétés de résistance accrue à la rupture de viscosité, et une texture non cohésive.

Le domaine technique auquel se rattache l'invention est celui du traitement par inhibition thermique de l'amidon, sans solvant hydro-alcoolique.

Dans ce domaine technique particulier, on peut citer plus particulièrement le brevet US 6.221.420 qui décrit un amidon thermiquement inhibé, obtenu par déshydratation puis traitement thermique.

Les principales étapes sont :

- la déshydratation de l'amidon à une teneur en eau inférieure à 1% réalisée à une température comprise entre 100 et 125°C, puis
- le traitement thermique de l'amidon sec ainsi obtenu, à environ 140°C, dans un lit fluidisé réactionnel, pendant une durée de l'ordre de 20 heures.

De manière préférentielle, avant l'étape de déshydratation de l'amidon, il est recommandé de procéder à une étape d'alcalinisation de l'amidon, permettant de porter le pH de la suspension d'amidon à une valeur comprise entre 7 et 10, de préférence comprise entre 8 et 10.

A ce stade, avant l'étape de déshydratation proprement dite qui précède l'étape d'inhibition, la teneur en eau de l'amidon (telle qu'exemplifiée) est alors comprise entre 8 et 10 %.

La demande de brevet US 2001/0017133 décrit un procédé similaire, dans lequel l'amidon est également déshydraté en dessous de 125°C avant que le processus d'inhibition ne soit démarré (à une température de plus de 100°C, préférentiellement compris entre 120 et 180°C, plus préférentiellement comprise entre 140 et 160°C) pendant une durée jusqu'à 20 heures, préférentiellement comprise entre 3 heures 30 et 4 heures 30.

Avant l'étape de déshydratation, l'étape d'alcalinisation classique conduit à une suspension d'amidon présentant une valeur de pH comprise entre 7,5 et 11,2, de préférence comprise entre 8 et 9,5%, et une teneur en eau compris entre 2 et 15 %.

Une variante a été proposée dans la demande de brevet WO 2014/042537, variante qui porte sur un chauffage d'un amidon alcalin à des températures comprises entre 140 et 190°C, en veillant à ce que le procédé d'inhibition soit initié et conduit en présence d'eau en quantité suffisante, soit plus de 1% d'eau.

En d'autres termes, ce procédé recommande d'inhiber thermiquement un amidon préalablement alcalinisé sans procéder à une étape de déshydratation.

La préparation d'amidon ou l'amidon sont ainsi amenés à un pH compris entre 9,1 et 11,2, préférentiellement à une valeur de l'ordre de 10, et l'humidité est ajustée entre 2 et 22 %, préférentiellement entre 5 et 10%.

L'inhibition thermique est réalisée ensuite directement sur cette poudre ou cet amidon, à une température

comprise entre 140 et 190°C, préférentiellement entre 140 et 180°C, pendant une durée de 30 minutes.

Une autre variante a été proposée, en abaissant au contraire le pH de l'amidon traité avant inhibition thermique. En effet, un inconvénient majeur tient au fait que des niveaux de pH élevés ont tendance à augmenter le brunissement de l'amidon pendant l'étape de chauffage.

C'est ainsi que dans la demande de brevet WO 2020/139997, il est décrit une étape de préparation de l'amidon qui consiste successivement à :

- préparer un lait d'amidon,
- amener le lait d'amidon ainsi préparé à un pH compris entre 5 et 6,5, par neutralisation si besoin,
- ajouter un tampon acide, et
- ajuster le pH.

C'est seulement ensuite qu'il est procédé à l'étape de traitement thermique proprement dite comprenant une étape de déshydratation et une étape d'inhibition thermique.

Dans cette demande de brevet, il est essentiel d'amener tout d'abord le lait d'amidon à une valeur de pH entre 5 et 6,5. Soit l'amidon présente déjà cette valeur de pH, considérée comme étant sa valeur naturelle de pH, soit il est procédé à une étape de « neutralisation » (par ajout d'acide ou de base) pour atteindre cet intervalle de pH. Cette étape peut prendre jusqu'à 24 heures.

Ensuite, il est ajouté un tampon de pH citrate ou acide citrique afin d'amener le pH du lait d'amidon à une valeur de pH comprise entre 4 et 6. Cette étape peut demander encore jusqu'à 24 heures.

Enfin, pour fabriquer un amidon thermiquement inhibé, il est enseigné dans cette demande de brevet de procéder à la déshydratation et l'inhibition thermique du lait d'amidon ainsi traité. Cette étape peut prendre jusqu'à 4 heures de réaction.

Il est enfin établi que ce procédé permet d'obtenir des amidons thermiquement inhibés plus blancs et présentant un gout amélioré par rapport aux amidons thermiquement inhibés préparés par voie classique, i.e. après imprégnation alcaline.

Il n'en demeure pas moins que cette méthode de préparation d'amidons thermiquement inhibés est perfectible. En effet, elle présente l'inconvénient, du point de vue de son procédé mis en œuvre, de devoir réaliser l'imprégnation du lait d'amidon en milieu acide seulement après avoir contrôlé finement le pH initial de l'amidon.

Ensuite, un traitement de ce type conduit à produire des amidons thermiquement inhibés présentant un taux de citrate fixé élevé, de l'ordre de plus de 0,2 %, traduisant un degré de fonctionnalisation important.

Dans l'état de l'art, il est présenté d'autres alternatives pour améliorer le taux d'inhibition thermique de l'amidon, afin d'améliorer ses propriétés technologiques.

C'est ainsi que dans le brevet EP 1.102.792 il est proposé de doper l'amidon en présences d'oligosaccharides présentant de 1 à 20 unités de sucres.

Sous certaines conditions de mise en œuvre, le mélange d'amidon et d'oligosaccharides développe alors une meilleure stabilité au stockage à froid.

Cependant, pour certaines applications alimentaires, il doit être ajouté de lourdes étapes de purification permettant de retirer les oligosaccharides de l'amidon après traitement thermique.

Dans le brevet EP 2.251.358, il est préféré mettre en œuvre un mélange pulvérulent d'amidon et d'hémicellulose soluble dans l'eau, dans des proportions particulières.

Le traitement thermique consiste quant à lui en un traitement à la chaleur humide à une température de 100 à 200°C.

Il est d'ailleurs préconisé une incorporation de carbonate de sodium (ou de composés alcalins similaires) avec de l'hémicellulose dans de l'amidon de tapioca, de riz gluant ou de maïs cireux.

Cependant, il est surtout recherché un procédé de modification de l'amidon de telle sorte que le gonflement et / ou la désintégration (par exemple, rupture) des granules d'amidon soient efficacement supprimés sans aucun traitement chimique.

Selon ce brevet, l'objectif n'est pas d'améliorer à proprement parler les propriétés technologiques de l'amidon ainsi thermiquement modifiés, mais d'empêcher la gélatinisation de l'amidon pour la fabrication de crème pâtissières.

Il demeure donc un besoin de disposer d'un nouveau procédé de préparation d'amidons thermiquement modifiés qui leur confère des propriétés de viscosité améliorés, tout en conservant ses excellentes propriétés de résistance, voire permettant d'améliorer la coloration des produits obtenus.

Et la société Demanderesse a trouvé que ce besoin pouvait être satisfait en proposant un procédé de traitement thermique d'un mélange d'au moins deux amidons granulaires d'origines botaniques distinctes, en conditions acides.

## Description de l'invention

Selon l'invention, le procédé de préparation d'un mélange d'au moins deux amidons modifiés thermiquement, dans lequel les amidons sont des amidons granulaires d'origines botaniques distinctes, comprend les étapes consistant à :

(i) Préparer un lait d'amidon contenant au moins deux amidons d'origines botaniques distinctes, présentant une matière sèche totale comprise entre 30 et 40 %, de préférence entre 35 et 37 % en poids,
(ii) Préparer un tampon citrate à pH compris entre 4 et 6, de préférence de 6, et ajouter ledit tampon citrate dans le lait d'amidons de manière à obtenir un pH du lait compris entre 4 et 6, de préférence 6,
(iii) Assurer un temps de contact compris entre 0,5 et 5 heures,
(iv) Sécher jusqu'à une humidité d'équilibre entre 10 à 12 %,
(v) Chauffer à une température de plus de 150°C, pendant un temps de séjour compris entre 10 minutes et 6 heures,
(vi) Remettre en suspension, rectifier le pH, éventuellement laver et sécher à nouveau les amidons thermiquement modifiés ainsi obtenus.

En choisissant de réaliser le mélange des amidons d'origines botaniques distinctes en conditions acides avant le traitement thermique proprement dit, la société Demanderesse va à l'encontre des enseignements de l'état de l'art.
Il est en effet connu de réaliser des mélanges d'amidons pour optimiser leurs propriétés fonctionnelles, mais cela est réalisé par le mélange de variétés d'amidons thermiquement modifiés avec des amidons natifs comme décrit dans la demande internationale WO 2020/018061.
Par ailleurs, la modification thermique d'un mélange d'amidons d'origines botaniques différentes permet d'assurer un même niveau de modification des deux (ou plus) composants du mélange.
A la connaissance de la société Demanderesse, il n'a jamais été décrit des procédés de traitement thermique sur un mélange préalable d'au moins deux amidons d'origines botaniques distinctes, en conditions acides.
Les amidons à utiliser dans le procédé de l'invention peuvent être de toute origine, par exemple le maïs, le maïs waxy, l'amylomaïs, le blé, le blé waxy, le pois, la féverole, la pomme de terre, la pomme de terre waxy, le tapioca, le tapioca waxy, le riz, le konjac, etc.
De manière préférentielle, on choisira de mélanger une fécule de pomme de terre avec un amidon de maïs, plus particulièrement de l'amidon de maïs waxy (à haute teneur en amylopectine).
Selon un mode de réalisation particulier, le procédé selon l'invention peut concerner la préparation d'un mélange de deux amidons modifiés thermiquement, dans lequel les amidons sont des amidons granulaires d'origine botanique distincte, présents dans le mélange en quantités égales, formant ainsi un mélange 50/50 en masse.
Le procédé conforme à l'invention demande la préparation d'un lait d'amidons d'au moins deux origines botaniques distinctes à une matière sèche totale comprise entre 30 et 40 %, de préférence entre 35 et 37 % en poids. Comme il sera exemplifié ci-après, la matière sèche est fixée à 36,5 % en poids.
L'étape suivante consiste alors à amener le pH du lait d'amidons mélangés à un pH compris entre 4 et 6, de préférence de 6.
Pour ce faire, il faut préparer un tampon citrate audit pH, et l'ajouter dans le lait d'amidons de manière à obtenir un pH du lait compris entre 4 et 6, de préférence 6.
Il est assuré ensuite un temps de contact compris entre 0,5 et 5 heures, de préférence de l'ordre de 0,5 heure.
Après filtration, on sèche la préparation à une humidité d'équilibre de l'amidon entre 10 à 12 %.
Le séchage peut se faire à 60°C en séchoir Retsch® de laboratoire, mais aussi dans une hotte avec sa ventilation naturelle à température ambiante, ou dans un séchoir pilote / industriel, à une température de plus de 100°C.
Après séchage à 60°C puis broyage en Thermomix® afin de démotter les amidons et éviter la formation d'agrégats, il est procédé au traitement thermique proprement dit.
Comme il sera exemplifié ci-après, le traitement thermique est réalisé en à une température de 170°C, pendant une durée s'étalant de 0,5 à 2 heures de réaction. Cette cinétique permet de faire varier le degré de fonctionnalisation des amidons thermiquement modifiés ainsi préparés (plus les amidons sont fonctionnalisés plus ils sont résistants à des conditions d'utilisation contraignantes, i.e. pH acide, fort cisaillement, haute température).
Mais ces conditions sont tout à fait transposables à une mise en œuvre en dispositif turbosécheur continu ou en lit fluidisé réactionnel.
Dans un premier mode de réalisation du procédé selon l'invention, l'étape suivante de traitement thermique proprement dit peut être réalisée dans des dispositifs de traitement thermique combinant les échanges de chaleur par conduction et par convection, dispositif de type turbosécheur, par exemple au moins un turbosécheur continu de type VOMM, qui permet ainsi, en fonction de la taille dudit VOMM, d'atteindre un temps de réaction très court, de l'ordre de quelques minutes, soit moins de 5 minutes par étage de traitement thermique.
Les consignes de température sont ensuite fixées à des valeurs de plus 190°C, de préférence comprise entre

200 et 210°C, pendant un temps de séjour compris entre 10 et 60 minutes, plus préférentiellement encore entre 15 et 35 minutes.

Le delta T, défini comme la différence de température entre la température de consigne et la température du produit en sortie du réacteur, est compris entre 17 et 27°C.

Dans un second mode de réalisation du procédé selon l'invention, le traitement thermique proprement dit peut-être réalisé dans des dispositifs de type « lit fluidisé réactionnel ».

Comme il est connu de l'homme du métier, ce dispositif est constitué d'un réacteur qui permet de mettre en suspension un solide divisé grâce à un gaz, en l'occurrence un mélange air/azote. La vitesse du gaz est réglée en fonction de la matière première.

La température de traitement thermique (température du produit) est fixée à plus de 130 °C, de préférence entre 130 et 200°C avec un temps de réaction variant entre 30 min et 6 h, préférentiellement entre 2 et 4 heures.

Selon un mode de réalisation particulier, la présente invention concerne un mélange d'au moins deux amidons modifiés thermiquement d'origine botanique distincte produits par le procédé tel que défini ci-dessus, caractérisé en ce qu'il présente un taux de citrate libre inférieur à 0,05 % et un taux de citrate fixé compris entre 0,05 et 0,15 %.

Selon un mode de réalisation particulier, la présente invention concerne un mélange d'au moins deux amidons modifiés thermiquement tel que défini ci-dessus, caractérisé en ce qu'il présente une coloration exprimée en valeur L* comprise entre 80 et 90, et en valeur Yie comprise entre 15 et 20.

Les amidons thermiquement modifiés selon l'invention seront avantageusement utilisés, en fonction de leurs propriétés respectives, en tant qu'agent épaississant ou agent texturant dans des applications alimentaires, notamment dans les soupes, sauces et dans les produits laitiers.

Une des limitations principales des amidons thermiquement modifiés fabriqués à partir d'une seule source botanique, est une viscosité développée légèrement plus faible que celle des amidons chimiquement modifiés du marché, nécessitant un surdosage en cas de remplacement dans le cadre d'une solution respectant le 100% naturel et « avec le moins de transformation chimique possible ». (en anglais « clean label »).

Ces mélanges s'inscrivent donc comme une solution simple et performante pour les industries fabriquant par exemple des sauces.

Plus particulièrement ces mélanges seraient adaptés aux exigences technologiques de pasteurisation, cisaillement moyen et pH acides.

L'invention sera mieux comprise à l'aide des exemples qui suivent, lesquels se veulent illustratifs et non limitatifs.

Exemples

**Matériels et méthodes**

Ci-dessous les deux produits utilisés pour le tampon pH 6.

| NOM | | CAS | Formule Brut | Mw g/mol |
|---|---|---|---|---|
| 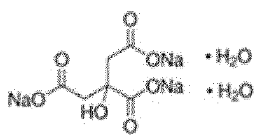 | **Sodium citrate tribasic dihydrate** | **6132-04-3** | **$C_6H_5Na_3O_7.2H_2O$** | **294,1** |
| 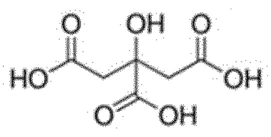 | **Citric acid, Anhydrous** | **77-92-9** | **$C_6H_8O_7$** | **192,12** |

*Mesure de la conductivité et du pH*

*Conductivité*

La méthode mise en œuvre ici est adaptée de la Pharmacopée Européenne - édition officielle en vigueur - Conductivité (§ 2.2.38).

Matériels :

Conductivimètre électronique KNICK 703 équipé également de sa cellule de mesure et vérifié selon le mode opératoire décrit dans le manuel d'instructions qui s'y rapporte.

Mode opératoire :

On prépare une solution contenant 20 g d'échantillon sous forme de poudre et 80 g d'eau distillée présentant une résistivité supérieure à 500 000 ohms.cm.

On effectue la mesure, à 20°C, à l'aide du conductivimètre en se reportant au mode opératoire indiqué dans le manuel d'utilisation de l'appareil.

Les valeurs sont exprimées en microSiemens/cm (μS/cm) ou milliSiemens/cm (mS/cm).

*pH*

La méthode mise en œuvre ici est adaptée de la Pharmacopée Européenne - édition officielle en vigueur - pH (§ 2.2.3).

On prépare une suspension de l'échantillon à analyser à 20 % (P/P) et détermine la valeur du pH à l'aide d'un pH mètre de laboratoire, en se reportant au mode opératoire indiqué dans le manuel d'utilisation de l'appareil. Le pH est exprimé à 0,01 unité près.

*<u>Mesure des citrates par HPLC</u>*

On réalise le dosage des citrates :

- directement après traitement thermique, sur produits lavés et séchés, (mesure des citrates libres) puis,
- après hydrolyse (mesure des citrates fixés) selon les méthodes suivantes.

*Méthode de dosage*

Après séparation par chromatographie d'échange d'ions, l'ion citrate est détecté par conductimétrie. La quantification se fait par la méthode de l'étalonnage interne.

On utilise comme matériels un ensemble de chromatographie liquide haute performance composé de :

- Un système ICS 2100 Thermofisher ;
- Un échantillonneur permettant de maintenir les échantillons à 10°C (type TSP AS-AP) ;
- Un suppresseur AERS 500- ultra ;
- Une colonne Thermo AS11 HC 250*4 mm avec pré colonne AG11-HC 4*50 mm.
- des filtres pour chromatographie ionique - IC 0,45 μm - Pall.

On utilise comme réactifs :

- Eau de qualité CLHP
- Citrate de sodium tribasic dihydrate de Sigma
- Acide trifluoroacétique de Sigma
- Solution d'étalon interne : solution d'acide trifluoroacétique à 400 mg/L
- Acide chlorhydrique 2N de Merck
- Cartouche EGC-KOH de Thermo.

Le mode opératoire est le suivant :
- Solvant A : eau de qualité CLHP,
- Programme d'élution :

| Temps (min) | Débit (mL/min) | KOH |
|---|---|---|
| 0 | 1,3 | 1,5 |
| 15 | 1,3 | 1,5 |

(suite)

| Temps (min) | Débit (mL/min) | KOH |
|---|---|---|
| 28 | 1,3 | 1,2 |
| 48 | 1,3 | 28 |
| 60 | 1,3 | 40 |
| 60,1 | 1,3 | 60 |
| 67 | 1,3 | 60 |
| 67,1 | 1,3 | 1,5 |
| 77 | 1,3 | 1,5 |

- Volume injecté : 25 μL
- Température colonne : 36°C
- Temps d'analyse : 77 min
- Température des échantillons : 10°C
- ASRS : 193 mA

*Etalonnage*

Préparer 6 points de courbe.

- Peser x mg de citrate de sodium, soit x compris entre 10 et 250 mg et ajuster à 500 mL d'eau. Agiter.
- Prélever 0,5 mL, ajouter 0,5 mL d'étalon interne et compléter à 20 mL avec de la soude 1 mM.
- Filtrer et injecter.
- Calculer le poids des standards en chlorure (poids en chlorure de sodium (Mw de l'ion/ Mw de sel)).

Tracer la courbe d'étalonnage : rapport des hauteurs de pics (= poids du standard en chlorure/poids de l'étalon interne).

*Echantillon*

Peser 100 mg d'échantillon + 0,5 mL d'étalon interne à 20 mL d'eau. Filtrer . Injecter.

*Lavage et séchage*

Dans un bécher de 250 ml, on introduit environ 20 g de l'échantillon à analyser et 200 ml d'eau déminéralisée. On recouvre d'un verre de montre et agite pendant 20 minutes à l'aide d'un agitateur magnétique. On filtre ensuite dans un entonnoir de Buchner présentant un diamètre de 150 mm équipé d'un filtre Durieux n°111 bande blanche, d'un diamètre de 150 mm ou équivalent.

On remet le filtrat dans un bécher de 250 ml, le disperse dans 200 ml d'eau déminéralisée et remue pendant 20 minutes. On filtre à nouveau et rince avec 200 ml d'eau déminéralisée.

On sèche le produit filtré en étuve de laboratoire sur la nuit, puis on broie de manière à éviter les grumeaux.

*Hydrolyse*

Dans le ballon de 250 ml à fond plat et à col rodé, on introduit une prise d'essai « P », exactement pesée de l'échantillon à analyser. On ajoute une quantité d'eau distillée égale à (100 - P), 100 ml d'acide chlorhydrique 2N et quelques régulateurs d'ébullition (pierre ponce en grains). On place dans le chauffe-ballon électrique sous réfrigérant à reflux et laisser 45 minutes à partir de l'ébullition. On refroidit puis neutraliser avec la solution de soude à 40% jusqu'à pH 7.

Expression des résultats

La teneur en ion citrate en % est déterminée par l'équation suivante :

$$Q/P \times 100$$

où :

Q = quantité de citrate lue sur la courbe (mg)
P = poids de l'échantillon en mg.

Mesure de la viscosité d'une suspension d'amidon à l'aide du Rapid Viscosimeter Analyser (RVA)
Cette mesure est réalisée dans des conditions de concentration déterminées et suivant un profil d'analyse température/temps adapté.
Deux solutions tampons sont préparées :

*Tampon A*

Dans un bécher de 1 litre, contenant 500 ml d'eau déminéralisée, on ajoute

- 91,0 g d'acide citrique monohydrate (pureté > 99,5 %) et homogénéise,
- 33,0 g de chlorure de sodium (pureté > 99,5 %), et homogénéise jusqu'à dissolution complète,
- 300,0 g de soude 1N.

On transvase dans une fiole jaugée de 1 L et complète avec de l'eau déminéralisé à 1 L.

*Tampon B*

On mélange 100 g de Tampon A avec 334 ,0 g d'eau déminéralisée.
On prépare le produit à analyser de la manière suivante :
Une masse de 1,37 g du produit sec à analyser ainsi obtenu est introduite directement dans le bol du viscosimètre, et on introduit de la solution Tampon B jusqu'à l'obtention d'une masse égale à 28,00 ± 0,01 g. On homogénéise à la pale d'agitation du Rapid Visco Analyser (RVA-NewPort Scientific).
Le profil d'analyse temps / température et vitesse dans le RVA est alors réalisé comme suit :

[Tableau 1]

| Temps hh:mm:ss | Température °C | Vitesse de rotation Tour/min (RPM) |
|---|---|---|
| 00:00:00 | 50 | 100 |
| 00:00:10 | 50 | 500 |
| 00:00:20 | 50 | 960 |
| 00:00:30 | 50 | 160 |
| 00:01:00 | 50 | 160 |
| 00:05:00 | 92 | 160 |
| 00:17:00 | 92 | 160 |
| 00:20:00 | 50 | 160 |
| Fin de test : 00:20:05 (hh:mm:ss)<br>Température initiale : 50°C ± 0,5°C<br>Intervalle d'acquisition des données : 2 secondes<br>Sensibilité : basse (low) | | |

Les résultats des mesures sont donnés en RVU (unité utilisée pour exprimer la viscosité obtenue sur le RVA), sachant que 1 unité RVU = 12 cPoises (cP).
Pour rappel, 1 cP = 1 mPa.s.
Les résultats seront donc présentés en mPa.s.
Les mesures de viscosité seront réalisées « au pic », i.e. valeur de viscosité maximale entre 4 et 6 minutes, et « à la chute », i.e. la différence entre la valeur de la viscosité au pic et celle mesurée à 17 minutes.

*Test de sédimentation*

On procède à la dispersion du produit en milieu aqueux et mesure le volume décanté.

*Solution A*

- Chlorure de zinc : 10 g
- Chlorure d'ammonium : 26 g
- Eau distillée : qsp 100 ml

Dans un pot de 250 ml, introduire une prise d'essai de 1,0 g anhydre du produit à analyser. Ajouter 100 ml de la solution A, boucher, homogénéiser et placer au bain-marie pendant 10 min. Refroidir dans un bain d'eau froide, homogénéiser à nouveau, transvaser dans une éprouvette de 100 ml et mesurer le volume décanté après 24 heures.

Le volume décanté, exprimé en ml, est donné par la formule suivante :

'volume décanté d'amidon / volume total) x 100

Il est alors considéré qu'un volume de décantation :

- de plus de 70 ml traduit un produit faiblement fonctionnel / faiblement résistant,
- entre 60 et 70 ml : moyennement fonctionnel / moyennement résistant,
- entre 40 et 60 ml : hautement fonctionnel / résistant
- moins de 40 ml : très hautement fonctionnel ou très résistant

*Mesure de la coloration*

La mesure colorimétrique est basée sur la théorie des couleurs opposées qui spécifie que les réponses des cônes (cellules de la rétine de l'œil humain responsables de la vision des couleurs) aux couleurs rouge, verte et bleu sont recombinées en signaux opposés « noir-blanc », « rouge-vert » et « jaune-bleu » lorsque transmis au cerveau par le nerf optique.

Cette mesure repose sur les échelles de couleur largement utilisées dans les industries alimentaires et les industries des polymères, appelées échelles L*, a*, b* de CIELAB.

Les échelles de type L*, a* et b* se définissent de la manière suivante :

- axe « L* » (clarté) : 0 correspond au noir, 100 correspond au blanc
- axe « a* » (rouge-vert) : les valeurs positives dont attribuées au rouge ; les valeurs négatives sont attribuées au vert ; le 0 est la neutralité
- axe « b* » (jaune-bleu) : les valeurs positives dont attribuées au jaune ; les valeurs négatives sont attribuées au bleu ; le 0 est la neutralité.

L'indice « L* » a donc une valeur comprise entre 0 et 100, tandis que les indices « b* » et « a* » n'ont pas de limitations numériques. L'appareil de mesure est classiquement un spectrocolorimètre Colorflex® EZ, en suivant les spécifications du constructeur (Version du manuel 1.2 d'août 2013 pour firmware CFEZ version 1.07 et supérieure - cf. page 17 et 38).

La mesure est réalisée dans une coupelle d'échantillon en verre de 64 mm dans laquelle on introduit l'échantillon de manière à remplir à moitié la coupelle en verre pour avoir suffisamment de matière afin de bien recouvrir la surface en contact avec les rayons (pour homogénéité de mesure).

Le Yie (Indice de jaunissement) est un nombre calculé à partir de données spectrophotométriques qui décrit le changement de couleur d'un échantillon testé du « clair ou blanc » à « jaune », bien connu de l'homme du métier.

**Exemple 1** : **Obtention du mélange d'amidons modifiés thermiquement en étuve ventilée**

*Préparation de la base en phase lait :*

On met en suspension dans de l'eau déminéralisée le mélange 50/50 Fécule de pomme de terre + amidon de

maïs WAXILYS® à une matière sèche de 36,5% puis on ajoute le tampon citrate de manière à obtenir un pH du lait à 6.

On attend la stabilisation au moins 30 min et mesure le pH et la conductivité de la suspension.

On filtre sur fritté de porosité 3 puis séchons sur séchoir de type RETSCH® à 60°C vers 10-12% en humidité.

On broie sur Thermomix® afin de démotter l'amidon et éviter la formation d'agrégats.

*Traitement thermique*

On effectue la réaction à 170°C en coupelle en aluminium dans une étuve ventilée de labo type MEMMERT™.

On pèse 35 à 40 g com par coupelle en aluminium (type pour METTLER TOLEDO® LJ16 Balance mesure d'humidité) de base préparée.

On met les coupelles dans l'étuve MEMMERT™ préalablement réglée à 170°C.

Puis on prélève des échantillons à différents temps pour analyses de la cinétique de réaction.

*Mesures : Humidité, pH, conductivité, coloration (L * et Yie)*

Tableau 1.

| | | | à 20% de MS | | | |
|---|---|---|---|---|---|---|
| REF | PE | Humidité | pH | Conduc. | MESURES COLORATION sur COLORFLEX HunterLab | |
| | HEURES | % | | µS | L* | Yi |
| 043-- BASE PRIMPREGNEE | 0 | 10,67 | 6,5 | 346 | 97 | 8 |
| 043 A | 0,5 | 0,09 | 6,4 | 335 | 96 | 9 |
| 043 B | 0,75 | 0,01 | 6,3 | 327 | 94 | 11 |
| 043 C | 1 | 0,01 | 6,3 | 324 | 94 | 12 |
| 043 D | 1,5 | 0,01 | 6,2 | 321 | 92 | 17 |
| 043 E | 2 | 0,01 | 6,0 | 316 | 91 | 20 |

*Remise en suspension des produits.*

Après la réaction à 170°C, on remet en suspension l'échantillon entre 30 et 36 % de MS en eau déminéralisée.

On rectifie le pH si nécessaire entre 5,5 et 6,5 par NaOH.

On filtre sur un fritté de porosité 2.

On sèche le gâteau sous une hotte ventilée une nuit à température ambiante et broie (IKA®) de manière à démotter et rendre l'échantillon homogène.

*Contrôles : Humidité, pH, conductivité, colorations, RVA, test sédimentation.*

Tableau 2

| | | MESURES APRES RECTIFICATION pH, FILTRATION, SECHAGE ET BROYAGE | | | | |
|---|---|---|---|---|---|---|
| | | | à 20% de MS | | | |
| PRODUIT LAVE | PE | Humidité | pH | Conduc. | MESURES COLORATION sur COLORFLEX HunterLab | |
| | HEURES | % | | µS | L* | Yi |
| 043 AL | 0,5 | 16,0 | 6,1 | 235 | 97 | 7 |
| 043 BL | 0,75 | 14,7 | 6,1 | 207 | 95 | 10 |
| 043 CL | 1 | 14,7 | 5,6 | 193 | 95 | 10 |
| 043 DL | 1,5 | 15,0 | 5,7 | 173 | 94 | 14 |
| 043 EL | 2 | 13,5 | 5,8 | 173 | 93 | 18 |

Sont obtenus des produits après lavage dont les pH sont compris entre 5,5 et 6,5 et une conductivité comprise entre 170 µS et 235µS. Les colorations en Yie (jaune) sont comprises entre 7 et 18. Par comparaison la base native maïs waxy à un Yie 8,11.

**Résultats**

Mesures de viscosités RVA.

Les résultats sont présentés dans le tableau 3 et la Fig.1.

Tableau 3

| | | MCL 106H : 1,37 g anh. QSP 28g tampon B -- en cPs | | | | | |
|---|---|---|---|---|---|---|---|
| REF | PE Heures | V0 | pic ou max entre 4 et 6 mn ① | Visco V 92°C +12' ② | chute = ①-② | MAX visco entre 4 et 10' | V 10' à 50°C |
| Natif 50/50 PdT/ Waxy | /// | 8,9 | 1145 | 187 | 958 | 1145 | 258 |
| 043-- BASE PRIMPREGNEE | 0 | 7,8 | 1066 | 203 | 863 | 1066 | 278 |
| 043 AL | 0,5 | 12,0 | 648 | 430 | 218 | 651 | 587 |
| 043 BL | 0,75 | 6,6 | 574 | 525 | 49 | 607 | 735 |
| 043 CL | 1 | 7,4 | 562 | 576 | -14 | 625 | 830 |
| 043 DL | 1,5 | 7,1 | 394 | 563 | -169 | 529 | 841 |
| 043 EL | 2 | 3,2 | 183 | 357 | -174 | 287 | 539 |

Chaque mélange d'amidons thermiquement modifiés selon l'invention présente une stabilité améliorée durant le process d'utilisation par rapport à l'amidon natif : moins de phénomène de prise en viscosité et de rétrogradation sont observés lors de l'utilisation de ces amidons. Sur ce point, on constate en effet que plus la chute RVA tend vers 0 ou devient négative, plus le produit sera fonctionnalisé donc plus il sera résistant et moins il exprimera de rétrogradation.

*Test de sédimentation*

Tableau 4

| REF | TEMPS REACTION HEURES | VOLUME DECANTATION ml |
|---|---|---|
| **043 - BASE PRIMPREGNEE** | **0** | **100** |
| **043 AL** | **0,5** | **97** |
| **043 BL** | **0,75** | **78** |
| **043 CL** | **1** | **73** |
| **043 DL** | **1,5** | **53** |
| **043 EL** | **2** | **43** |

Après 2 h de réaction on obtient donc bien un produit fortement fonctionnel.

**Exemple 2 : obtention d'un amidon de maïs WAXILYS® modifiés thermiquement en étuve ventilée**

Le but de cette expérience et de préparer un amidon thermiquement modifié selon le même procédé que l'exemple 1, mais à partir d'une seule source d'amidon, en l'occurrence ici l'amidon de maïs waxy, afin de le comparer ensuite au produit fabriqué à partir du mélange d'amidon de maïs waxy et de fécule de pomme de terre selon l'invention.

*Préparation de la base en phase lait*

Dans un bécher de 1000 ml, on introduit l'amidon de maïs waxy (WAXILYS® tel que commercialisé par la société Demanderesse), puis met en suspension en eau déminéralisée pour une matière sèche (MS) totale de 36,5% en poids. On ajoute dans le lait d'amidon directement en poudre le sodium citrate et l'acide citrique de manière à obtenir un pH de 4. On attend la stabilisation au moins 30 minutes et mesure le pH et la conductivité de la suspension. On filtre sur Fritté de porosité 3. On sèche sur séchoir type RETSCH® à 60°C jusqu'à une humidité d'équilibre de l'ordre de 13 %. On broie sur broyeur Thermomix® afin de démotter l'amidon et éviter la formation d'agrégats.

*Traitement thermique*

On pèse 40 g d'échantillon et place dans une coupelle en aluminium pour balance METTLER TOLEDO® LJ16 (Balance de mesure de l'humidité). On introduit la coupelle dans l'étuve ventilée MEMMERT™ préalablement chauffée à 170°C. On déclenche le chronomètre dès la fin d'introduction des coupelles, et les ressort en fonction de la cinétique de réaction choisie.

*Lavage et rectification du pH des produits après réaction par remise en suspension* Remise en suspension de l'échantillon à 36% de MS en eau déminéralisée, rectification du pH entre 4,5 et 6,5 par NaOH, filtration sur un fritté de porosité 3, séchage du gâteau sous une hotte ventilée une nuit à température ambiante. Broyage (IKA®) de manière à démotter et rendre la poudre l'échantillon homogène. Mesures : Humidité, pH, conductivité, coloration (L* et Yie), viscosité RVA 4500 sur produits lavés et test de sédimentation.

**Résultats**

Mesures physicochimiques réalisées sur les produits finaux après lavage : l'humidité, le pH, la conductivité en µS, la coloration. Les résultats sont présentés dans le tableau 5 suivant.

Tableau 5

| Essais | Traitement thermique | Humidité | A 20%MS | | Mesures coloration Colorflex® Hunter Lab | |
|---|---|---|---|---|---|---|
| | | | pH | Conductivité | L* | YIE |
| | Heures | % | | µS | | |
| Essai 011 A | 0.5 | 15 | 5.5 | 336 | 97.3 | 6.4 |
| Essai 011 B | 1 | 14.7 | 5.9 | 176 | 96.9 | 6.9 |
| Essai 011 C | 1.5 | 14.8 | 6.2 | 183 | 96.4 | 8.0 |
| Essai 011 D | 2 | 14.1 | 4.6 | 203 | 96.1 | 8.5 |
| Essai 011 E | 3 | 14.5 | 5.9 | 176 | 95 | 11,7 |

Sont obtenus des produits après lavage dont les pH sont compris entre 4,6 et 6,5 et une conductivité comprise entre 176 µS et 336 µS.

Les colorations en Yie (jaune) sont comprises entre 6,4 et 11,7. Par comparaison la base native Waxy un Yie de 8,11.

Mesures de viscosité RVA.

Les résultats sont présentés dans le tableau 6 et la Fig. 2.

Tableau 6

| | | RVA 4500 à 92°C - MCL 106H : 1,37 g anh. QSP 28g tampon B -- en cPs | | | | | |
|---|---|---|---|---|---|---|---|
| REF | PE Heures | V0 | pic ou max entre 4 et 6 mn ① | Visco V 92°C +12' ② | chute = ①-② | MAX visco entre 4 et 10' | V 10' à 50°C |
| 011-- base imprégnée | 0 | 9,7 | 1015 | 107 | 908 | 1015 | 146 |
| 011 A | 0,5 | 5,2 | 689 | 471 | 218 | 689 | 603 |
| 011 B | 1 | 4,3 | 121 | 225 | -104 | 170 | 346 |

(suite)

| | | RVA 4500 à 92°C - MCL 106H : 1,37 g anh. QSP 28g tampon B -- en cPs | | | | | |
|---|---|---|---|---|---|---|---|
| REF | PE Heures | V0 | pic ou max entre 4 et 6 mn ① | Visco V 92°C +12' ② | chute = ①-② | MAX visco entre 4 et 10' | V 10' à 50°C |
| 011 C | 1,5 | 3,9 | 71 | 124 | -53 | 90 | 215 |
| 011 D | 2 | 18,3 | 47 | 66 | -19 | 53 | 135 |
| 011 E | 3 | 11,1 | 36 | 50 | -14 | 42 | 93 |

Chaque amidon thermiquement modifié présenté ci-dessus présente une stabilité améliorée durant le process d'utilisation par rapport à l'amidon natif : moins de phénomène de prise en viscosité et de rétrogradation sont observés lors de l'utilisation de ces amidons. Sur ce point, on constate en effet que plus la chute RVA tend vers 0 ou devient négative, plus le produit sera fonctionnalisé donc plus il sera résistant et moins il exprimera de rétrogradation.

*Test de sédimentation*

Les résultats sont présentés dans le tableau ci-dessous.

Tableau 7

| Essais | Traitement Thermique | Volume de décantation |
|---|---|---|
| | Heures | mL |
| Base maïs waxy | 0 | 100 |
| Essai 011 A | 0,5 | 82 |
| Essai 011 B | 1 | 37 |
| Essai 011 C | 1,5 | 22 |
| Essai 011 D | 2 | 30 |
| Essai 011 E | 3 | 27 |

Après 1 heure de réaction, sont obtenus des produits très hautement fonctionnels, c'est-à-dire très résistants.

**Comparaison Mélange traité citrate à un amidon de waxy traité citrate seul**

La comparaison est aisée, en présentant sur le même graphe, les courbes RVA de deux produits présentant le même niveau de fonctionnalisation (voir Fig. 3), en l'occurrence, le mélange 043 LE de l'exemple 1 et le produit unique 011B.

On obtient ainsi, pour un niveau de fonctionnalisation comparable (i.e. tests de sédimentation équivalent), des mesures en viscosité plus élevées pour le mélange traité citrate.

**Exemple 3. Obtention du mélange d'amidons imprégnés carbonate et modifiés thermiquement en étuve ventilée**

La préparation des amidons thermiquement modifiés est réalisée classiquement, comme nous l'avons dit plus haut, en mettant en oeuvre une étape préalable d'imprégnation alcaline des amidons, plutôt qu'un traitement acide comme recommandé par la société Demanderesse dans la présente invention.

Le but de cette expérience et de comparer les propriétés du mélange d'amidon waxy et de fécule de pomme de terre prétraités par ces deux voix différentes, au pH diamétralement opposé.

*Préparation du mélange d'amidons et imprégnation au carbonate de sodium*

On met en suspension dans de l'eau déminéralisée le mélange 50/50 fécule de pomme de terre + amidon de maïs WAXILYS® à une matière sèche de 36,5%.

On prend ensuite la mesure du pH et de la conductivité de la suspension.
On ajoute dans ce lait du carbonate de sodium dans les conditions alternatives suivantes :

- Si ajout de carbonate de sodium sous forme poudre : en quantité suffisante pour obtenir une conductivité finale mesurée sur une poudre remise en suspension à 20% de MS entre 0,5 et 1 mS/cm. On laisse un temps de contact de 2 heures,
- Si ajout de carbonate de sodium en solution à 30 % de concentration massique : en quantité suffisante pour obtenir une conductivité, sur le lait, comprise entre 2 et 4 mS/cm. Un temps de contact de 30 minutes suffit, étant donné que le carbonate de sodium est déjà bien dissout en solution à 30 %.

On filtre et sèche à une humidité d'équilibre de l'amidon entre 10 et 14 %.

*Traitement thermique à l'étuve*

On pèse 40 g d'échantillon et place dans une coupelle en aluminium pour balance METTLER TOLEDO® LJ16 (Balance de mesure de l'humidité). On introduit la coupelle dans l'étuve ventilée MEMMERT™ préalablement chauffée à 170°C. On déclenche le chronomètre dès la fin d'introduction des coupelles, et les ressort en fonction de la cinétique de réaction choisie.

*Neutralisation et lavage des produits obtenus*

Après la réaction à 170°C, on remet en suspension l'essai à 36% de MS en eau déminéralisée. On rectification le pH entre 5,5 et 6 par HCl.
On filtre et lave par percolation de sorte à obtenir sur le produit final remis en suspension à 20% de MS une conductivité < 500 µS/cm.
On sèche le « gâteau » obtenu sous une hotte ventilée une nuit à température ambiante.
On broie grossièrement sur broyeur IKA® puis tamise sur une grille de 315 µm. Mesures : Humidité, pH, conductivité, coloration (L* et Yie), viscosité RVA 4500 sur produits lavés et test de sédimentation.

**Résultats**

Mesures physicochimiques :

Tableau 8

| | | MESURES APRES RECTIFICATION pH, FILTRATION, SECHAGE ET BROYAGE | | | | |
|---|---|---|---|---|---|---|
| | | | à 20% de MS | | | |
| PRODUIT LAVE | PE HEURES | Humidité | pH | Conduc. | MESURES CO LORATION | |
| | | % | | µS | L* | Yi |
| 038 AL | 0,5 | 12,7 | 6,6 | 26 | 94 | 11 |
| 038 BL | 1 | 13,0 | 6,3 | 31 | 89 | 23 |
| 038 CL | 1,5 | 11,3 | 6,2 | 40 | 86 | 29 |
| 038 DL | 2 | 12,2 | 6,2 | 48 | 85 | 32 |

*Mesures de viscosité RVA*

Les résultats sont présentés dans le tableau 9 et la Fig. 4.

Tableau 9

| | | RVA 4500 : 1,37g anh QSP 28 g tampon B - cPs | | | | | |
|---|---|---|---|---|---|---|---|
| REF PE | Temps réaction Heures | V0 | pic ou max entre 4 et 6 mn ① | Visco après 12' à 92°C ② | chute = ①-② | MAX entre 4 et 10' | Visco FIN V 10' à 50°C |
| 038 AL | 0,5 | 9,2 | 756 | 428 | 328 | 756 | 539 |
| 038 BL | 1 | 3,3 | 849 | 718 | 131 | 886 | 1017 |
| 038 CL | 1,5 | 1,1 | 550 | 842 | -292 | 861 | 1169 |
| 038 DL | 2 | -0,1 | 342 | 783 | -441 | 678 | 1070 |

Chaque mélange d'amidons thermiquement modifiés décrits ci-dessus présente une stabilité améliorée durant le process d'utilisation par rapport à l'amidon natif : moins de phénomène de prise en viscosité et de rétrogradation sont observés lors de l'utilisation de ces amidons. Sur ce point, on constate en effet que plus la chute RVA tend vers 0 ou devient négative, plus le produit sera fonctionnalisé donc plus il sera résistant et moins il exprimera de rétrogradation.

*Test de sédimentation*

Les résultats sont présentés dans le tableau 10 suivant.

Tableau 10

| REF ESSAIS | Heure PE | Test sedimentation MCL 330N ml |
|---|---|---|
| 038 AL | 0,5 | 94 |
| 038 BL | 1 | 67 |
| 038 CL | 1,5 | 51 |
| 038 DL | 2 | 46 |

On constate qu'après 1h de réaction nous obtenons déjà un produit moyennement fonctionnel et dès 1h30 de réaction et surtout après 2h nous obtenons des produits très fortement fonctionnels.

**<u>Comparaison Mélange traité citrate à un Mélange traité carbonate</u>**

Le résultat de cette comparaison (test de sédimentation, coloration et viscosité RVA) peut être présentée dans le tableau suivant, sur la base de deux mélanges présentant le même niveau de fonctionnalisation, en l'occurrence les deux produits obtenus après 2 heures de traitement thermique.

La comparaison est possible, en présentant sur le même graphe, les courbes RVA de deux produits présentant le même niveau de fonctionnalisation (voir Fig. 5).

Tableau 11

| | | | | RVA 4500 | | |
|---|---|---|---|---|---|---|
| REF ESSAIS | Heure PE | Test sedimentation MCL 330N ml | Coloration Yi | pic ou max entre 4 et 6 mn | chute | Visco FIN V 10' à 50°C |
| 038 DL | 2 | 46 | 32 | 342 | -441 | 1070 |
| 043 EL | 2 | 43 | 18 | 183 | -174 | 539 |

L'intérêt du procédé par traitement citrate conforme à l'invention est d'obtenir un produit présentant des fonctionnalités importantes donc une résistance forte aux conditions de process (température, acidité, cisaillement) tout en obtenant un produit très peu coloré par rapport au procédé de traitement carbonate.

On obtient ainsi, pour un niveau de fonctionnalisation comparable (i.e. tests de sédimentation équivalent), des mesures en viscosité plus élevées pour le mélange traité citrate.

**Exemples 4 : comparaison avec des produits commerciaux de même catégorie**

Les produits du commerce présentés dans ce tableau ci-dessous sont produits à partir d'une seule source botanique, en l'occurrence l'amidon de maïs waxy.

Les résultats des mesures sont présentés dans le tableau ci-dessous et représentés dans la Fig.6.

Tableau 12

| | COLORATION | | TEST SEDIMENTATION | RVA : MCL106H 1.37g anh QSP 28 g tampon B | | | DOASGE CITRATES |
|---|---|---|---|---|---|---|---|
| | L* | Yie | MCL 330N ml | pic ou max entre 4 et 6 mn | chute | V 10' à 50°C | % sec |
| 038 DL | 85 | 32 | 46 | 342 | -441 | 1070 | /// |
| 043EL | 93 | 18 | 43 | 183 | -174 | 539 | 0,03 |
| NOVATION ENDURA 100 | 92 | 17 | 43 | 108 | -110 | 354 | 0,10 |
| NOVATION LUMINA 0100 | 95 | 9 | 44 | 136 | -72 | 315 | 0,17 |

Il apparait que pour un même niveau de résistance (même test de sédimentation), la viscosité est plus élevée avec les produits issus de l'invention qu'avec les produits du commerce.

En réalisant un mélange fécule de pomme de terre et amidon de maïs waxy, les viscosités au pic ainsi que les viscosités finales sont plus élevées.

Le mélange 50/50 donne le meilleur compromis entre sa viscosité au pic qui représente la viscosité développée par le produit et sa viscosité à la chute qui représente son niveau de résistance.

Le mélange 50/50 permet de bénéficier des avantages des deux matières premières en termes de texture, résistance et développement de viscosité.

**Revendications**

**1.** Procédé de préparation d'un mélange d'au moins deux amidons modifiés thermiquement, dans lequel les amidons sont des amidons granulaires d'origine botanique distincte, qui comprend les étapes consistant à :

(i) Préparer un lait d'amidon contenant au moins deux amidons d'origines botaniques distinctes, présentant une matière sèche totale comprise entre 30 et 40 %, de préférence entre 35 et 37 % en poids,
(ii) Préparer un tampon citrate à un pH compris entre 4 et 6, de préférence 6, et ajouter ledit tampon citrate dans le lait d'amidon de manière à obtenir un pH du lait compris entre 4 et 6, de préférence 6,
(iii) Assurer un temps de contact compris entre 0,5 et 5 heures,
(iv) Sécher jusqu'à une humidité d'équilibre entre 10 à 12 %,
(v) Chauffer à une température de plus de 150°C, pendant un temps de séjour compris entre 10 minutes et 6 heures,
(vi) Remettre en suspension, rectifier le pH, éventuellement laver et sécher à nouveau les amidons thermiquement modifiés ainsi obtenus.

**2.** Procédé selon la revendication 1, **caractérisé en ce que** l'origine botanique des amidons est choisie dans le groupe constitué par le maïs, le maïs waxy, l'amylomaïs, le blé, le blé waxy, le pois, la féverole, la pomme de terre, la pomme de terre waxy, le tapioca, le tapioca waxy, le riz, le konjac et est plus préférentiellement de la fécule de pomme de terre et de l'amidon de maïs waxy.

**3.** Procédé selon la revendication 1, **caractérisé en ce que** la montée en température de l'amidon sec obtenu à l'étape (iv) est réalisée dans des dispositifs de type turbosécheurs continus, pour lesquels la température de consigne est fixée à plus de 190°C, de préférence comprise entre 200 et 210°C, pendant un temps de séjour compris entre 10 et 60 minutes, plus préférentiellement encore entre 15 et 35 minutes et le delta T, défini comme la différence de température entre la température de consigne et la température du produit en sortie du réacteur, est compris entre 17 et 27°C.

4. Procédé selon la revendication 1, **caractérisé en ce que** la montée en température de l'amidon sec obtenu à l'étape (iv) est réalisée dans des dispositifs de type lit fluidisé réactionnel, pour lesquels la température de consigne est fixée à plus de 130°C, de préférence comprise entre 130 et 200°C, pendant un temps de séjour compris entre 30 minutes et 6 heures, plus préférentiellement encore entre 2 heures et 4 heures.

5. Mélange d'au moins deux amidons modifiés thermiquement d'origine botanique distincte produits par le procédé de l'une quelconque des revendications précédentes, **caractérisé en ce qu'**il présente un taux de citrate libre inférieur à 0,05 % et un taux de citrate fixé compris entre 0,05 et 0,15 %.

6. Mélange d'au moins deux amidons modifiés thermiquement selon la revendication 5, **caractérisé en ce qu'**il présente une coloration exprimée en valeur L* comprise entre 80 et 90, et en valeur Yie comprise entre 15 et 20.

7. Utilisation d'un amidon modifié thermiquement produit par le procédé selon l'une quelconque des revendications 1 à 4, en tant qu'agent épaississant ou agent texturant dans des applications alimentaires, en particulier dans les soupes et sauces, et dans les produits laitiers.

**Patentansprüche**

1. Verfahren zur Herstellung einer Mischung aus wenigstens zwei thermisch modifizierten Stärken, wobei die Stärken körnige Stärken unterschiedlicher botanischer Herkunft sind, welches Verfahren die folgenden Schritte umfasst:

   (i) Herstellen einer Stärkemilch, die wenigstens zwei Stärken unterschiedlicher botanischer Herkunft mit einem Gesamt-Trockengehalt zwischen 30 und 40 Gew.-%, bevorzugt zwischen 35 und 37 Gew.-%, enthält,
   (ii) Herstellen eines Citratpuffers mit einem pH-Wert zwischen 4 und 6, bevorzugt 6, und Zugabe des Citratpuffers zu der Stärkemilch, so dass ein pH-Wert der Milch zwischen 4 und 6, bevorzugt 6, erreicht wird,
   (iii) Sicherstellen einer Kontaktzeit zwischen 0,5 und 5 Stunden,
   (iv) Trocknen bis zu einer Gleichgewichtsfeuchte zwischen 10 und 12 %,
   (v) Erhitzen auf eine Temperatur von über 150 °C während einer Verweilzeit zwischen 10 Minuten und 6 Stunden,
   (vi) Rückführung in Suspension, pH-Korrektur, gegebenenfalls Waschen und erneutes Trocknen der so erhaltenen thermisch modifizierten Stärken.

2. Verfahren nach Anspruch 1, **dadurch gekennzeichnet, dass** die botanische Herkunft der Stärken aus der Gruppe gewählt ist, die aus Mais, Wachsmais, Amylomais, Weizen, Wachsweizen, Erbsen, Ackerbohnen, Kartoffeln, Wachskartoffeln, Tapioka, Wachstapioka, Reis, Konjak und bevorzugt Kartoffelstärke und Wachsmaisstärke besteht.

3. Verfahren nach Anspruch 1, **dadurch gekennzeichnet, dass** der Temperaturanstieg der in Schritt (iv) erhaltenen Trockenstärke in Vorrichtungen vom Typ kontinuierlicher Turbotrockner durchgeführt wird, bei denen die Solltemperatur auf über 190 °C, bevorzugt zwischen 200 und 210 °C, eingestellt ist, während einer Verweilzeit zwischen 10 und 60 Minuten, bevorzugt zwischen 15 und 35 Minuten, und das Delta T, definiert als die Temperaturdifferenz zwischen der Solltemperatur und der Temperatur des Produkts am Ausgang des Reaktors, zwischen 17 und 27 °C liegt.

4. Verfahren nach Anspruch 1, **dadurch gekennzeichnet, dass** der Temperaturanstieg der in Schritt (iv) erhaltenen Trockenstärke in Vorrichtungen vom Typ eines Wirbelschichtreaktors durchgeführt wird, bei denen die Solltemperatur auf über 130 °C, bevorzugt zwischen 130 und 200 °C, während einer Verweilzeit zwischen 30 Minuten und 6 Stunden, bevorzugt zwischen 2 Stunden und 4 Stunden, erfolgt.

5. Mischung aus wenigstens zwei thermisch modifizierten Stärken unterschiedlichen botanischen Ursprungs, hergestellt durch das Verfahren nach einem der vorhergehenden Ansprüche, **dadurch gekennzeichnet, dass** sie einen Gehalt an freiem Citrat von weniger als 0,05 % und einen Gehalt an gebundenem Citrat zwischen 0,05 und 0,15 % aufweist.

6. Mischung aus wenigstens zwei thermisch modifizierten Stärken nach Anspruch 5, **dadurch gekennzeichnet, dass** sie eine Färbung, ausgedrückt als L*-Wert, zwischen 80 und 90 und als Yie-Wert zwischen 15 und 20 aufweist.

7. Verwendung einer thermisch modifizierten Stärke, hergestellt nach einem der Verfahren nach den Ansprüchen 1 bis 4, als Verdickungsmittel oder Texturgeber in Lebensmittelanwendungen, insbesondere in Suppen und Saucen sowie

in Milchprodukten.

## Claims

1. A method for preparing a blend of at least two heat-modified starches, in which the starches are granular starches of different botanical origins, which comprises the steps consisting in:

   (i) preparing a starch milk containing at least two starches of different botanical origins, having total dry matter content comprised between 30 and 40%, and preferably between 35 and 37% by weight,
   (ii) preparing a citrate buffer with a pH comprised between 4 and 6, preferably 6, and adding said citrate buffer to the starch milk so as to obtain a milk pH comprised between 4 and 6, preferably 6,
   (iii) ensuring a contact time comprised between 0.5 and 5 hours,
   (iv) drying until reaching an equilibrium moisture content of 10 to 12%,
   (v) heating to a temperature higher than 150°C, for a residence time comprised between 10 minutes and 6 hours,
   (vi) resuspending, adjusting the pH, optionally washing and again drying the heat-modified starches thus obtained.

2. The method according to claim 1, **characterized in that** the botanical origin of the starches is selected from the group consisting of corn, waxy corn, amylomaize, wheat, waxy wheat, pea, faba bean, potato, waxy potato, tapioca, waxy tapioca, rice, konjac and is more preferentially potato starch and waxy corn starch.

3. The method according to claim 1, **characterized in that** the rise in temperature of the dry starch obtained in step (iv) is carried out in continuous turbo-dryer type devices, for which the setpoint temperature is set to more than 190 °C, preferably comprised between 200 and 210 °C, for a residence time comprised between 10 and 60 minutes, even more preferentially between 15 and 35 minutes and the delta T, defined as the difference in temperature between the setpoint temperature and the temperature of the product at the outlet of the reactor, is comprised between 17 and 27 °C.

4. The method according to claim 1, **characterized in that** the rise in temperature of the dry starch obtained in step (iv) is carried out in devices of the reaction fluidized bed type, for which the setpoint temperature is set to more than 130 °C, preferably comprised between 130 and 200 °C, for a residence time comprised between 30 minutes and 6 hours, even more preferentially between 2 hours and 4 hours.

5. A blend of at least two heat-modified starches of distinct botanical origin produced by the method of any one of the preceding claims, **characterized in that** it has a free citrate content of less than 0.05% and a bound citrate content comprised between 0.05 and 0.15%.

6. The blend of at least two heat-modified starches according to claim 5, **characterized in that** it has a coloring expressed with an L* value comprised between 80 and 90, and a Yie value comprised between 15 and 20.

7. Use of a heat-modified starch produced by the method according to any one of claims 1 to 4, as a thickening agent or texturizing agent in food applications, in particular in soups and sauces, and in dairy products.

[Fig. 1]

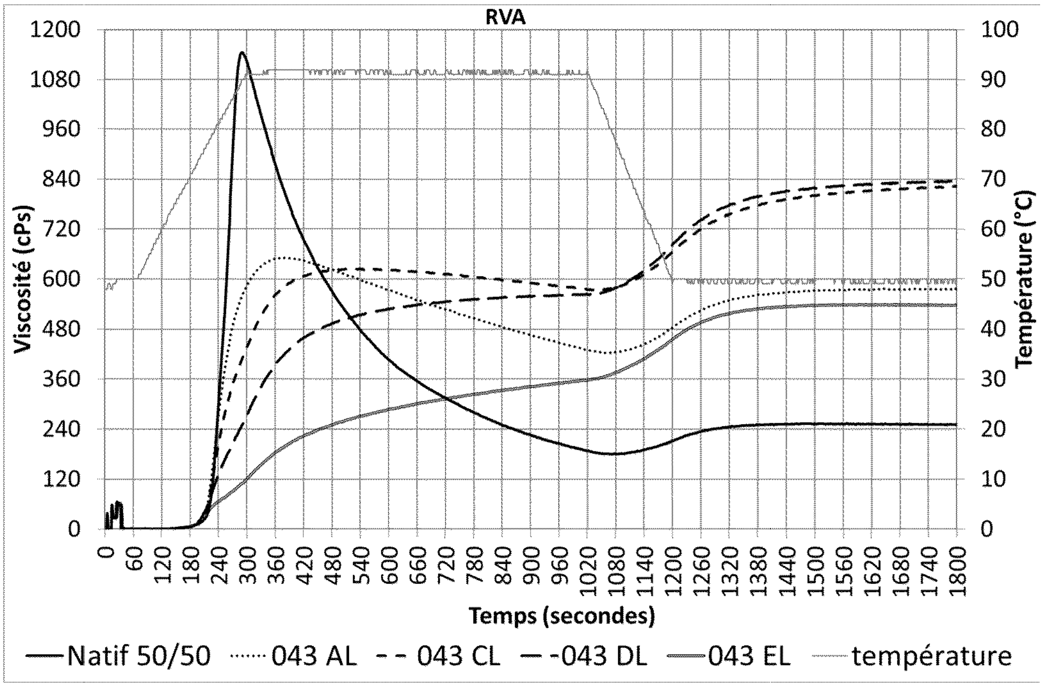
RVA
Viscosité (cPs)
Température (°C)
1200
1080
960
840
720
600
480
360
240
120
0
100
90
80
70
60
50
40
30
20
10
0
0 60 120 180 240 300 360 420 480 540 600 660 720 780 840 900 960 1020 1080 1140 1200 1260 1320 1380 1440 1500 1560 1620 1680 1740 1800
Temps (secondes)
Natif 50/50
043 AL
043 CL
043 DL
043 EL
température

[Fig. 2]

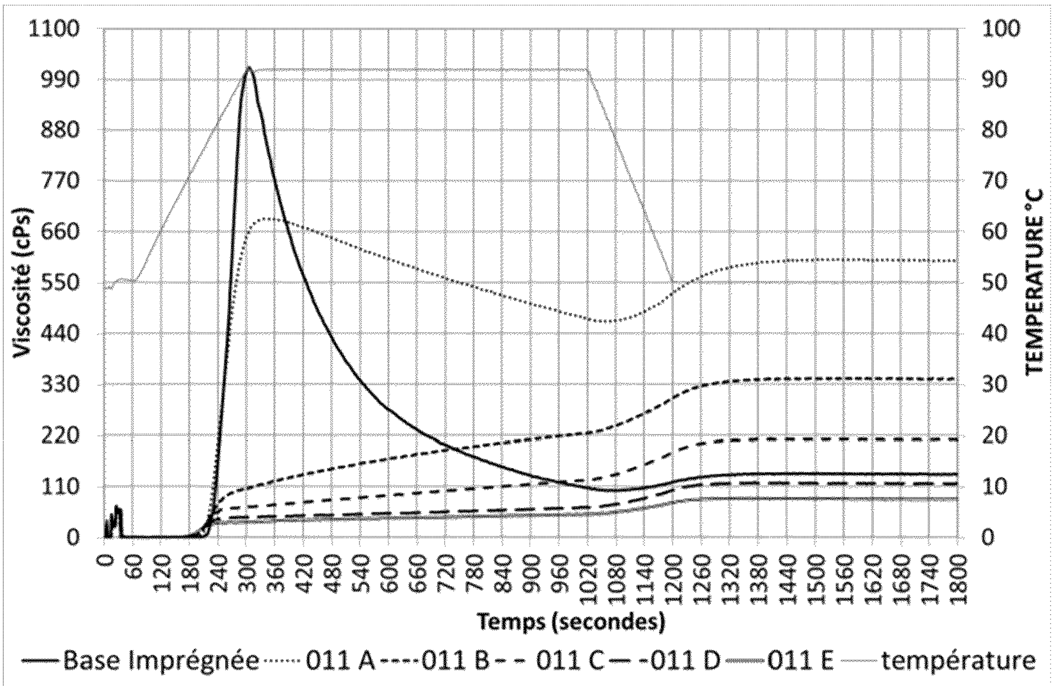
Viscosité (cPs)
TEMPERATURE °C
1100
990
880
770
660
550
440
330
220
110
0
100
90
80
70
60
50
40
30
20
10
0
0 60 120 180 240 300 360 420 480 540 600 660 720 780 840 900 960 1020 1080 1140 1200 1260 1320 1380 1440 1500 1560 1620 1680 1740 1800
Temps (secondes)
Base Imprégnée
011 A
011 B
011 C
011 D
011 E
température

[Fig. 3]

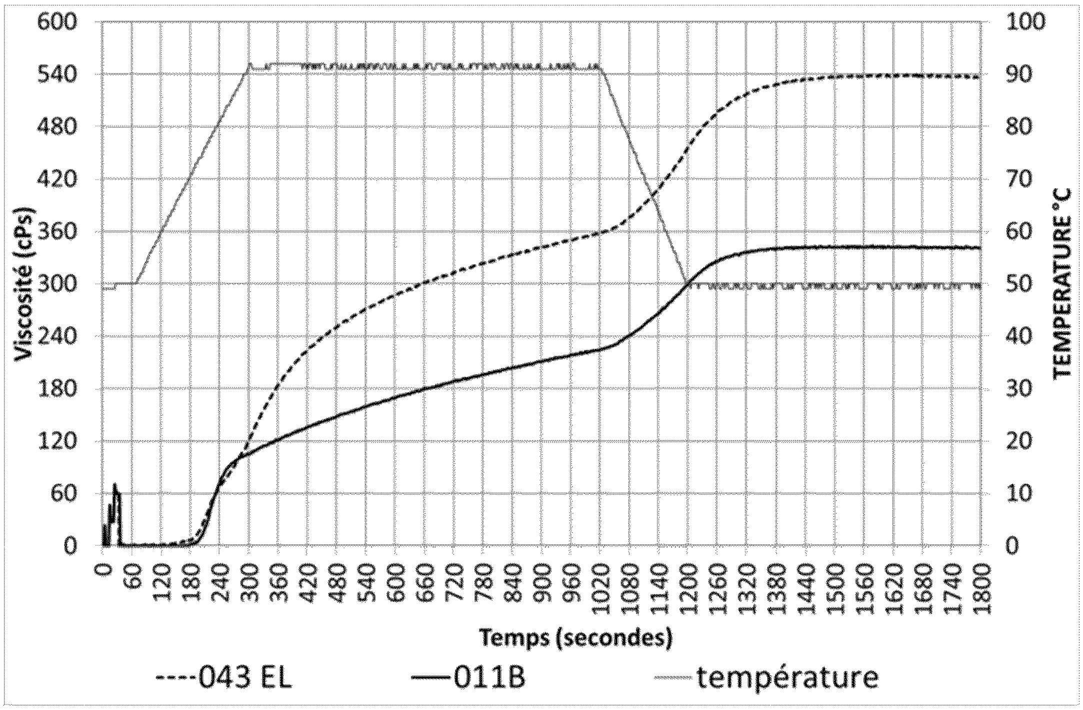
Viscosité (cPs)
TEMPERATURE °C
Temps (secondes)
----043 EL
—011B
—température

[Fig. 4]

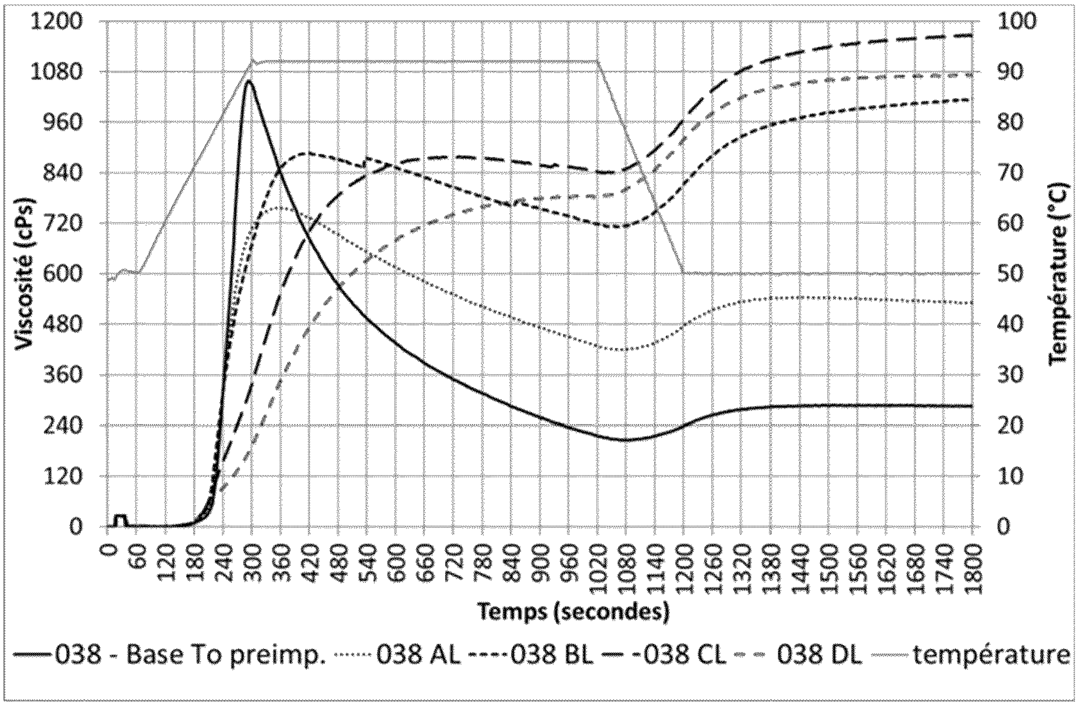
Viscosité (cPs)
Température (°C)
Temps (secondes)
—038 - Base To preimp.
·······038 AL
----038 BL
— -038 CL
- - 038 DL
—température

[Fig.5]

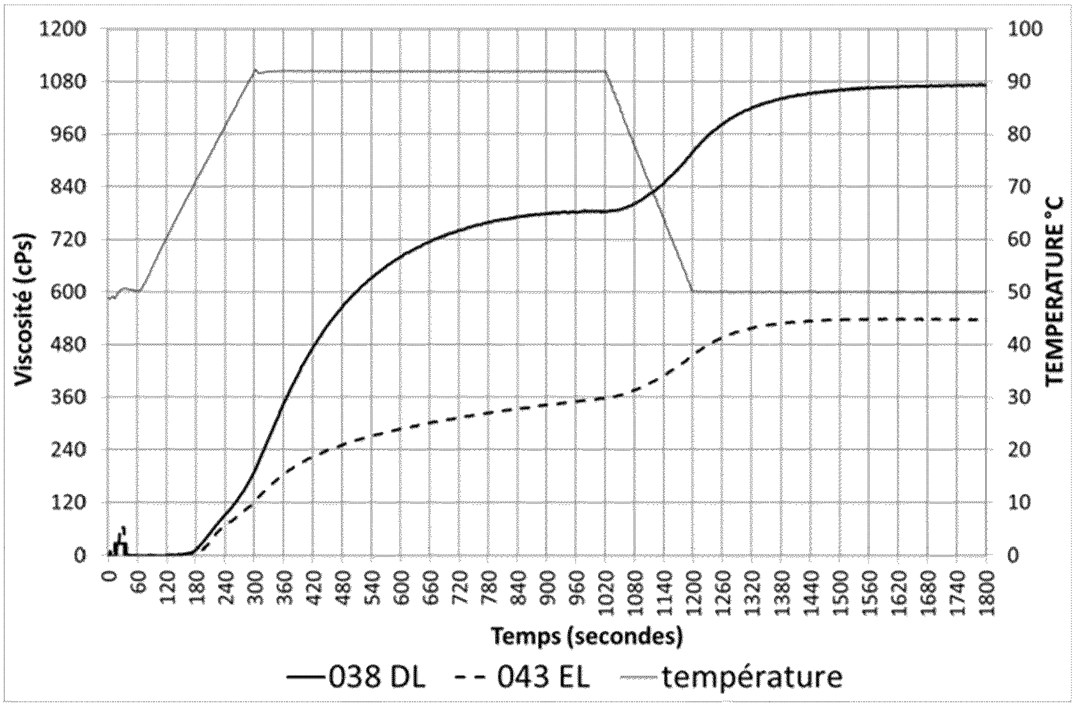


[Fig.6]

RVA 4500 à 92ºC

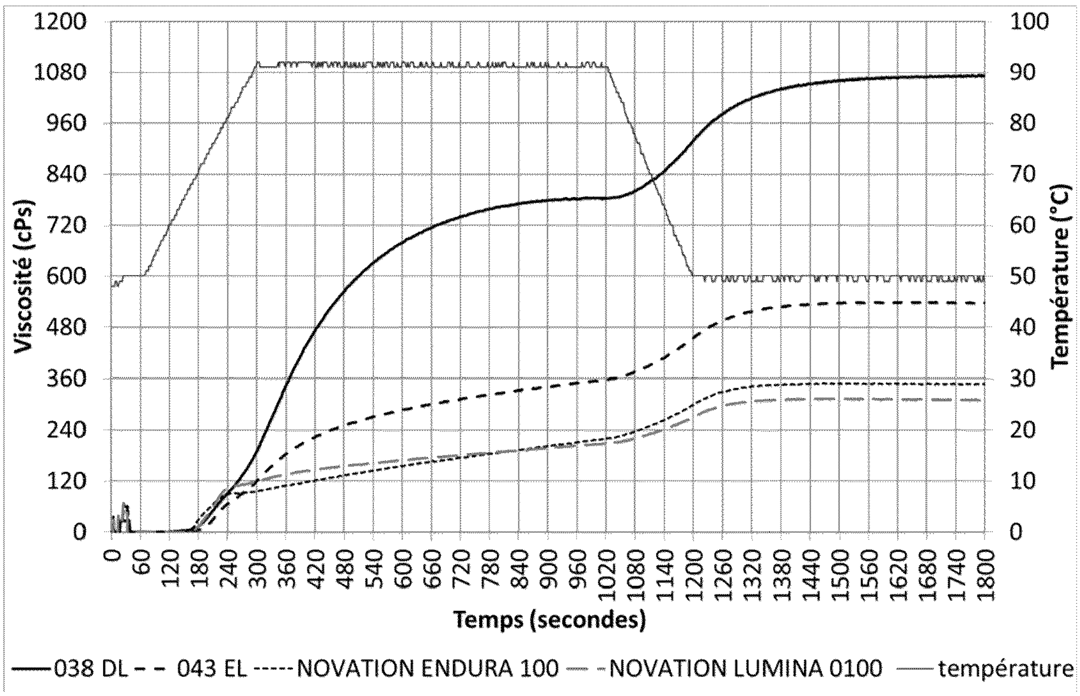

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6221420 B
- US 20010017133 A
- WO 2014042537 A
- WO 2020139997 A
- EP 1102792 A
- EP 2251358 A
- WO 2020018061 A